(19) Europäisches Patentamt
European Patent Office
Office européen des brevets

(11) Publication number: 0 450 724 A1

# (12) EUROPEAN PATENT APPLICATION

(21) Application number: 91200752.3

(22) Date of filing: 29.03.91

(51) Int. Cl.[5]: C08G 73/02, C09D 7/02, C09D 179/02, C08G 73/00, C09D 7/12

(30) Priority: 31.03.90 NL 9000762

(43) Date of publication of application: 09.10.91 Bulletin 91/41

(84) Designated Contracting States: AT BE CH DE DK ES FR GB GR IT LI NL SE

(71) Applicant: STAMICARBON B.V.
Mijnweg 1
NL-6167 AC Geleen(NL)

(72) Inventor: Hosteaux, Fried'l Pieter Francine
Spurriestraat 6
Wondelgem(BE)

## (54) Process for preparing block copolymers of tetrahydrofuran and oxazoline and hydrolysis products of these.

(57) The invention relates to a process for preparing tetrahydrofuran-oxazoline block copolymers by polymerizing in a first step under the influence of a catalyst a tetrahydrofuran and in a second step further polymerising an oxazoline thereto, characterized in that the catalyst used is a cationic initiator with a non-nucleophilic anion. The invention further relates to the block copolymers obtained and to the hydrolysis products thereof.

EP 0 450 724 A1

The invention relates to a process for preparing block copolymers comprising a first and a second portion, the first portion comprising polytetrahydrofuran and the second polyoxazoline, and the copolymers obtained.

Such a process is described in JP-A-4743000. According to JP-A-4743000 polytetrahydrofuran is iodized, upon which a polytetrahydrofuran-polyoxazoline block copolymer is produced using oxazoline. The process, however, is rather laborious - notably the iodization. And the resulting polymers have a rather broad molecular weight distribution, which is a disadvantage.

The object of the invention is to provide a simpler synthesis and to obtain polytetrahydrofuran-polyoxazoline block copolymers with a narrow molecular weight distribution. The narrow molecular weight distribution is particularly advantageous if the copolymers are used as dispersants.

The process according to the invention for preparing polytetrahydrofuran-polyoxazoline block copolymers by polymerizing in a first step under the influence of a catalyst a tetrahydrofuran (THF) and in a second step further polymerising an oxazoline thereto is characterized in that the catalyst used is a cationic initiator with a non-nucleophilic anion.

By using as catalyst a cationic initiator with a non-nucleophilic anion it will be found that tetrahydrofuran and oxazoline are co-polymerized to form a blockcopolymer with a narrow molecular weight distribution. It is a big advantage that after the preparation of polytetrahydrofuran no other catalyst system is required.

A cationic initiator comprises, for instance, an alkyl cation such as, for instance, the methyl or ethyl cation. Other cations are, for instance, an acyl cation or a trialkyl oxinium ion. This cation initiates the tetrahydrofuran polymerization. Essential for a proper operation of the catalyst for the production of a block copolymer with a narrow molecular weight distribution is for the cationic initiator to have a non-nucleophilic anion. 'Non-nucleophilic' is understood also to include 'hardly nucleophilic'. Non-nucleophilic anions are, for instance, triflate, perchlorate, phosphorus hexafluoride, antimony hexafluoride and BF3OH-. A highly suitable catalyst is, for instance, methyl or ethyl triflate, acetyl fluoride, triethyloxonium triflate, the reaction product of HF with SbF5. Polyfunctional initiators, for instance triflate anhydride, can in principle be used also, so that the invention comprises block copolymers with more than two blocks.

The catalyst is added depending on the eventually desired molecular weight, the final molecular weight being determined by the molar ratio between the cationic initiator and the monomers.

As without special measures the polymerization reaction is not terminated, a higher molecular weight can be obtained by the addition of extra monomer after the first polymerization step.

The preparation of polytetrahydrofuran by applying a cationic initiator such as, for instance, methyl triflate, is known from The British Polymer Journal 20 (1988) pp. 103-108. There is no indication, however, that oxazoline can be converted with polytetrahydrofuran to form a block copolymer.

From US-A-3644567 a block copolymerization with triflate anhydride is known. In US-A-3644567 no reference is made to the use of oxazolines in the block copolymer.

The polytetrahydrofuran block is preferably formed from more than 90% THF. A minor amount of other monomers, however, can be added also. The polymerization usually takes place between 10 and 40 °C, but also temperatures of between 0 and 80 °C are suitable.

The polyoxazoline block is preferably formed from more than 90% oxazoline or alkylated oxazoline. Highly suitable is, in addition to unsubstituted oxazoline, particularly 2-alkyl oxazoline, where alkyl may be methyl, ethyl, n-propyl, i-propyl, n-butyl, i-butyl, t-butyl, cyclohexyl, phenyl and octyl or mixtures of these.

The polymerization preferably takes place between 40 and 140 °C, particularly between 45 and 100 °C.

The molecular weight of the polytetrahydrofuran block will mostly be between 500 and 20,000, the polyoxazoline block usually has a molecular weight of between 200 and 4000.

The block copolymer may, of course, be built up also of more than two blocks, for instance if a bifunctional initiator is applied.

The block copolymer may be isolated by evaporating the solvent, in which process the oxazolinium end group can be retained.

If, on the other hand, the reaction mixture is poured out into water or into another reagent, the oxazolinium ring is opened and an amino ester end group is formed with the amine protonated. It is possible to neutralize this protonated amine by adding a base, such as NaOH. The block copolymer may subsequently be isolated by freeze drying, or by evaporation of the solvent.

It is possible to regulate the molecular weight of the block copolymer as a whole and the ratio of the two segments. The polymerization of the first and of the second portion proceeds according to a so-called living mechanism.

The copolymers obtained have a narrow molecular weight distribution, for instance characterized by a low polydispersity (D). The polydispersity can be measured by gel permeation chromatography (GPC) (D = Mw/Mn). The polydispersity of the polymers obtained according to the invention is normally lower than 2.0,

particularly lower than 1.5.

The resulting block copolymer, if it consists completely of tetrahydrofuran and alkyloxazoline, can be characterized by the following formula:

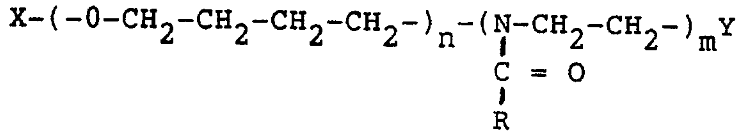

where X is the initiator and Y the end group and R hydrogen or an alkyl substituent. The polyether block (poly-THF) is rather apolar by nature, whereas the polyamide block is of a more strongly polar character.

The block copolymer as such can be used as dispersing agent. The dispersion comprising this block copolymer can further contain a.o. one or more fillers and one or more pigments.

The invention is further related to a coating comprising pigment, binder and a possible liquid solvent or dispersant, with 0,1-10% (wt) of the resin mixture being a block-copolymer according to the invention. The block copolymer, and notably the amide group, can further be hydrolized in a manner known per se to the person skilled in the art, so that a part of or (almost) all amide groups are converted into secondary amine groups. The polyether-block-polyamine copolymer formed is also highly suited as a dispersing agent, in part because after (partial) protonation the polyamine block is highly polar and hydrophilic. If a nomenclature is used proceeding from the monomers, this block copolymer is called polytetrahydrofuran-block-polyethyleneimine copolymer.

The invention will be elucidated by means of the following examples without being limited thereto. The examples give possible synthesis routes for block copolymers according to the invention.

Example I

100 ml (1.23 moles) tetrahydrofuran was siphoned over into a double-walled reaction vessel of 250 ml. An amount of 1.85 ml (0.0164 mole) methyl triflate was added during stirring at 25 ° C. After 12 minutes 13.24 ml (0.13 mole) 2-ethyloxazoline was added. The reaction mixture was heated to 60 ° C using a jacket with thermostat and stirred for four hours during refluxing. The THF solvent was subsequently evaporated with the use of a rotating evaporator and the block copolymer was further dried under vacuum. The molecular weight of the poly-THF portion, measured with Nuclear Magnetic Resonance (NMR) was 2200, of the polyethyl oxazoline portion 790. (The molecular weight was determined by relating the peak area of the methyl group of the initiator to the peak area of poly-THF and polyethyloxazoline). The total yield was 35 g. The polydispersity (D) was between 1.4 and 1.6, measured with GPC.

Example II

30 ml (0.369 mole) THF was put in a two-necked flask of 100 ml. An amount of 0.83 ml (0.0074 mole) methyl triflate was added during stirring at 25 ° C. After 12 minutes 1.48 ml (0.0147 mole) 2-ethyloxazoline was added. The non-reacted THF was evaporated off in a rotating evaporator and 50 ml $CH_3CN$ was added. To the solution 3.72 ml (0.0369 mole) ethyloxazoline was added now.

Using an oil bath the reaction mixture was heated to 60 ° C and stirred for eight hours during refluxing. The reaction mixture was poured out into 200 ml distilled water, upon which NaOH was added until the solution was basic. The molecular weight (measured according to NMR) of the poly-THF portion was 2200, of the polyethyloxazoline portion 693. The total yield of block copolymer was 8.5 g. The polydispersity (D) was between 1.4 and 1.6, measured with GPC.

Example III

100 ml (1.23 moles) THF was put in a double-walled reaction vessel of 250 ml. An amount of 1.84 ml (0.0164 mole) methyl triflate was added during stirring at 25 ° C. After 12 minutes 1.84 ml (0.00328 mole) 2-methyloxazoline was added. The non-reacted THF was evaporated off using an oil pump. The poly-THF was dissolved in 80 ml acetonitrile. To this solution was added 6.94 ml (0.082 mole) methyloxazoline. The reaction mixture was heated to 80 ° C using a jacket with thermostat and stirred for six hours during refluxing. The acetonitrile was evaporated off in the rotating evaporator and the block copolymer was dried under vacuum. The molecular weight of the poly-THF portion was 2200, of the poly-methyloxazoline portion

596. The total yield was 32 g.

Example IV

Acid hydrolysis of a block copolymer: 36 g poly-(tetrahydrofuran-block-ethyloxazoline) (0.14 mole ethyloxazoline, molecular weight of THF segment 5265, ethyloxazoline segment 3345) was put in a flask together with 75 ml $H_2O$ and 105 ml 37% HCl and refluxed for 45 minutes. After partial evaporation in a rotating evaporator and after addition of a sodium hydroxide solution (to a pH of 9), the block polymer was recovered by freeze drying. The salt could be removed by extraction with an organic solvent. The conversion, followed with NMR spectroscopy, proved to be complete.

Example V

Basic hydrolysis of a block copolymer: 20 g of a block copolymer of THF and methyloxazoline was dissolved in 150 ml water containing 4 g NaOH. After refluxing for two hours the conversion of the amide into the amine was about 50%.

Example VI and comparative experiment A

Two dispersions were made by dispersing the components mentioned in table 1 with 18 g glass beads for 20 min in a Dispermat CV mixer at 4000 rpm.

TABLE 1

| amounts in g | Ex. VI | Exp. A |
|---|---|---|
| Kronos 2160 (TiO2) | 8.3 | 8.3 |
| Sico-Echt Blau GA62(1) | 2.8 | 2.8 |
| Blanc fixe micro(2) | 1.4 | 1.4 |
| Byk P104 S (3) | 0.3 | 0.3 |
| Propylenealylolmethylether acetate (PMA) | 4.0 | 3.3 |
| Uralac 105-X-70 (polyester of DSM-Resins B.V., Zwolle) | 13.3 | 15.7 |
| [p-THF]-b-[p Etox]-copol* | 1.7 | - |

* the salt was removed
(1) phthalocyanine blue (BASF)
(2) filler: BaSO4 (Sachsleben)
(3) product of Byk (moistening agent)

Subsequently, to the two pigment dispersions 43.2 g Uralac 105-X-70 (saturated polyester resin of DSM Resins B.V., Zwolle) and 25 g Uramax 300 B1X55 (melamine resin of DSM Resins B.V., Zwolle, NL) were added and further mixing took place for 10 minutes at 1000 rpm. After that the glass beads were removed and the paints obtained were applied on a glass sheet, the thickness of the coating being 100 microns. The paint was hardened at 150° C in 30 minutes. The colour and the gloss were determined with a Bykometer.

The colour strength proved to be higher, according to the measurements, and in the coating according to example VI the gloss had increased from 43 to 50%.

Examples VII and VIII and comparative experiment B

Analogous to example VI a dispersion was made using the components mentioned in Table 2.

TABLE 2

| Components in g | Ex. VII | Ex. VIII | Exp. B |
|---|---|---|---|
| Kronos 2160($TiO_2$) | 7.0 | 7.0 | 7.0 |
| Sico Echt Blau GA62 | 2.3 | 2.3 | 2.3 |
| Blanc Fixe Micro | 1.2 | 1.2 | 1.2 |
| Byk P1045 | 0.2 | 0.2 | 0.2 |
| Uracron 1064 XB | 15.1 | 12.4 | 17.8 |
| self-crosslinking acrylate resin of DSM Resins B.V., Zwolle | | | |
| [p-THF]-b-[p-Etox]copol. | 1.4 | 2.8 | - |
| PMA | 1.3 | 2.6 | - |

The paint was produced also in an analogous manner from 28.5 g pigment dispersion, 66.9 g Uracron 1064BX (acrylate resin of DSM Resins B.V., Zwolle) and 4.6 g Epikote 1001 (epoxy resin of Shell Chemie, Netherlands) (50% solution in PMA).

After application (100) and stoving (150°C, 30 min), the gloss of 86% (Exp. B) was found to have increased to 87% (ex. VII) and 90% (ex. VIII). In the examples according to the invention the colour strength, too, was higher.

## Claims

1. Process for preparing tetrahydrofuran-oxazoline block copolymers by polymerizing in a first step, under the influence of a catalyst, a tetrahydrofuran (THF) and in a second step further polymerising an oxazoline thereto, characterized in that the castalyst used is a cationic initiator with a non-nucleophilic anion.

2. Process according to claim 1, characterized in that the catalyst used is alkyl triflate.

3. Process according to claim 1, characterized in that the catalyst used is triflate anhydride.

4. Process according to any one of claims 1-3, characterized in that the oxazoline used is a 2-alkyl oxazoline.

5. Block copolymer substantially formed from tetrahydrofuran and oxazoline, characterized in that the block copolymer has a polydispersity lower than 2.0.

6. Block copolymer according to claim 5, characterized in that the THF block has a molecular weight of between 500 and 20,000 and the oxazoline block has a molecular weight of between 200 and 4000.

**7.** Block copolymer substantially consisting of tetrahydrofuran and ethyleneimine.

**8.** Block copolymer according to claim 7, characterized in that the polymer has a polydispersity lower than 2.0.

**9.** Block copolymer obtainable by partial hydrolysis of the amide groups in a block copolymer substantially consisting of a polytetrahydrofuran segment and a polyalkyloxazoline segment.

**10.** Application of a block copolymer according to any one of claims 5-9 as dispersing agent.

**11.** Dispersion comprising a block copolymer according to any one of claims 5-9 and a filler or pigment.

**12.** Coating composition comprising pigment and binder and a possible liquid solvent or dispersant, with 0.1-10%(wt) of the resin mixture being a block copolymer according to any one of claims 5-9.

European Patent Office

# EUROPEAN SEARCH REPORT

Application Number

**EP 91 20 0752**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DATABASE WPI, accession no. 73-56950U [39], Derwent Publicatons Ltd, London, GB;<br>& JP-A-47 043 000 (JAPAN SYNTHETIC RUBBER)<br>----- | | C 08 G 73/02<br>C 09 D 7/02<br>C 09 D 179/02<br>C 08 G 73/00<br>C 09 D 7/12 |
| | | | TECHNICAL FIELDS SEARCHED (Int. Cl.5) |
| | | | C 08 G<br>C 09 D |

The present search report has been drawn up for all claims

| Place of search | Date of completion of search | Examiner |
|---|---|---|
| The Hague | 21 May 91 | LEROY ALAIN |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document